# EUROPEAN PATENT SPECIFICATION

(11) **EP 4 621 523 B1**
(45) Date of publication and mention of the grant of the patent: **05.08.2026**
(21) Application number: 25153539.9
(22) Date of filing: 23.01.2025
(51) Int. Cl.: G06F 1/16, H05K 5/02

(54) **ELECTRONIC APPARATUS**
ELEKTRONISCHES GERÄT
APPAREIL ÉLECTRONIQUE

(30) Priority: 22.03.2024 JP 2024046941
(43) Date of publication of application: 24.09.2025
(73) Proprietor: Lenovo (Singapore) Pte. Ltd., Singapore 556741 (SG)
(72) Inventor: WATAMURA, Kenji, Yokohama-shi, 220-0012 (JP); ONDA, Yuichi, Yokohama-shi, 220-0012 (JP); FUJII, Kazuo, Yokohama-shi, 220-0012 (JP)
(74) Representative: Openshaw & Co.

(56) References cited:
- US-A- 5 225 293
- US-A1- 2010 091 454

## Description

### BACKGROUND OF THE INVENTION

### Field of the Invention

The present invention relates to an electronic apparatus including a battery.

### Description of the Related Art

An electronic apparatus such as a laptop PC or a tablet PC includes a chassis formed in a flat box shape, and a battery stored in the chassis (see, for example, Patent No. 7309838).

US2010091454A1 discloses a portable computer that has a housing and a battery contained within the housing. The housing has a fixed housing panel and a removable access panel. A lever actuated latching mechanism locks the removable access panel and the battery within the portable computer. A lock blocks movement of the lever and prevents access to the interior of the computer. Magnetic elements facilitate operation of the lever and hold the access panel in place. The latch mechanism provides mechanical advantage when disengaging the magnets that hold the access panel.

US5225293A discloses a notebook computer having a removable battery having a recess in one side, the side including an overhang over the recess to form an overhang recess. A pivoting latch has two arms, one of which extends into the battery recess and includes a lip extending into the overhang recess. A leaf spring biases the first arm into the battery recess. A second arm of the pivoting latch contacts a release actuator which pivots to counteract the leaf spring to allow the first arm to be removed from the battery recess. A spring at the rear of the computer biases the battery so that the lip is positively retained in the overhang recess so that simply depressing the release actuator does not release the battery. When the battery is pushed back to compress this spring, the lip can clear the overhang and depressing the release actuator results in the first arm clearing the battery recess so that the battery can be removed while the release actuator is depressed.

### SUMMARY OF THE INVENTION

The electronic apparatus as described above is demanded to have a thin chassis. In view of this, a general electronic apparatus has such a configuration that a battery is embedded in a chassis so as to further thin the chassis. Because of this, the general electronic apparatus often has a configuration that does not assume replacement of a battery by a user.

In recent years, as the electronic apparatus as described above, a product superior in maintainability has been desired from the viewpoint of ESG (Environment, Social, Governance). In this regard, it is desirable that the battery be easily exchangeable.

In the meantime, as described above, the general electronic apparatus does not assume simple and easy replacement of the battery. For example, in a case where the battery is replaced in the electronic apparatus of Patent No. 7309838, first, a cover member forming a bottom surface of the chassis is removed to expose the battery. Subsequently, a screw thread or a pressure sensitive adhesive double coated tape that fixes the battery is removed, and a connecting portion with a mother board or the like is removed. Thus, complicated procedures are required. Accordingly, the battery replacement requires the complicated procedures using various tools, and therefore, it takes a lot of trouble for a general user, or the general user feels pressure.

The present invention is accomplished in view of the above technical problem, and an object of the present invention is to provide an electronic apparatus that can secure a thin chassis and achieve easy removal of a battery.

An electronic apparatus according to one aspect of the present invention includes: a chassis member having an opening surface; a cover member including a plate portion, and an inclined wall portion provided in a standing manner from an edge portion of the plate portion and inclined in a direction separating from the plate portion toward a standing direction of the inclined wall portion, the cover member being configured to open and close at least part of the opening surface; a battery detachably supported on an inner surface side of the chassis member and including a locked part on a first lateral surface facing the inclined wall portion; a latch member supported on the chassis member in such a manner as to be movable between a locked position where the latch member holds down the locked part and an unlocked position where the latch member retracts from the locked part, the latch member having an inclined surface facing an inner wall surface of the inclined wall portion at the locked position, wherein the inclined surface is disposed in proximity to or abutting the inner wall surface of the inclined wall portion at the locked position; and a spring member provided between the chassis member and the battery and configured to bias the battery such that the battery rises up from an inner surface of the chassis member.

The above-described aspect of the present invention can secure a thin chassis and achieve easy removal of a battery.

### BRIEF DESCRIPTION OF THE DRAWINGS

FIG. 1 is a plan view of an electronic apparatus according to one embodiment;
FIG. 2 is a bottom plan view of the electronic apparatus;
FIG. 3 is a view in which a cover member is removed from a chassis illustrated in FIG. 2;
FIG. 4 is a view in which a battery is removed from the chassis illustrated in FIG. 3;
FIG. 5 is a schematic sectional view along a line V-V in FIG. 2;
FIG. 6 is a schematic sectional view along a line VI-VI in FIG. 2;
FIG. 7 is a schematic perspective view of a lock mechanism section and its peripheral area;
FIG. 8A is a schematic side sectional view in which the chassis illustrated in FIG. 5 is put on a desk surface or the like with its bottom side faces upward and the cover member is removed;
FIG. 8B is a view in which a latch member illustrated in FIG. 8A is moved to an unlocked position;
FIG. 9A is a schematic side sectional view in which the chassis in FIG. 6 is put on a desk surface or the like with its bottom side faces upward and the cover member is removed;
FIG. 9B is a view in which the battery rises due to a biasing force from a spring member illustrated in FIG. 9A; and
FIG. 10 is a bottom plan view of a chassis including a cover member according to a modification.

### DETAILED DESCRIPTION OF THE INVENTION

The following will describe details of a preferred embodiment of an electronic apparatus according to the present invention with reference to the attached drawings.

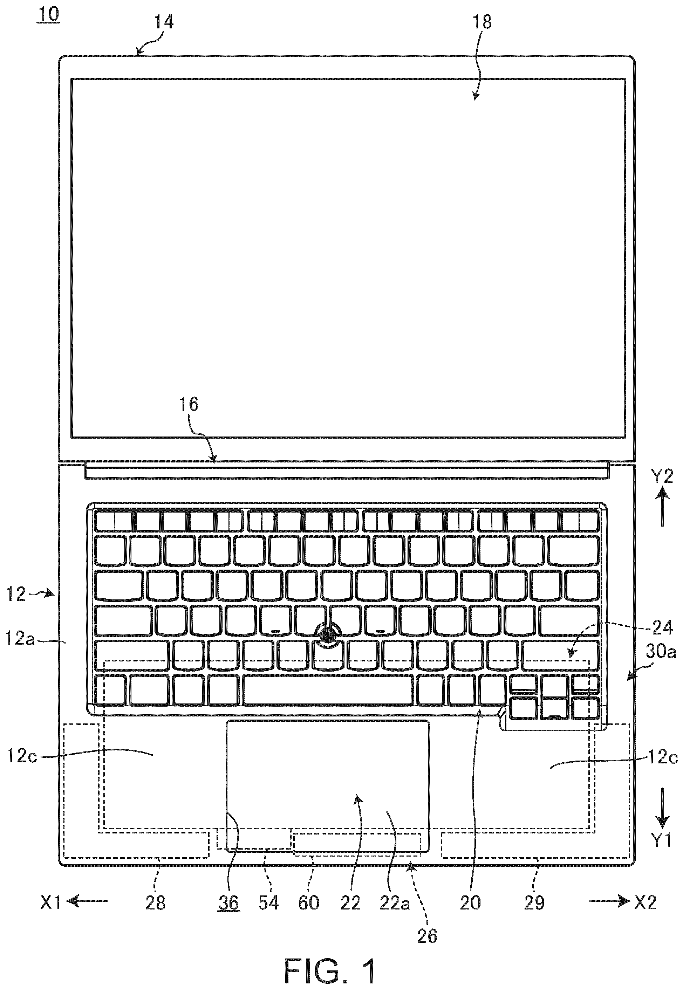

FIG. 1 is a plan view of an electronic apparatus 10 according to one embodiment. The electronic apparatus 10 is a clamshell-type laptop PC. The electronic apparatus 10 includes a chassis 12 and a cover 14 that are coupled to each other via a hinge 16 in a relatively rotatable manner. An electronic apparatus to which the present invention is applicable may also be a tablet PC, a smartphone, a portable gaming machine, or the like, for example, other than the laptop PC.

The cover 14 has a flat box shape. A display 18 faces the front surface of the cover 14. The display 18 is, for example, an organic EL display or a liquid crystal display. The cover 14 is coupled to a rear edge portion of the chassis 12 via the hinge 16.

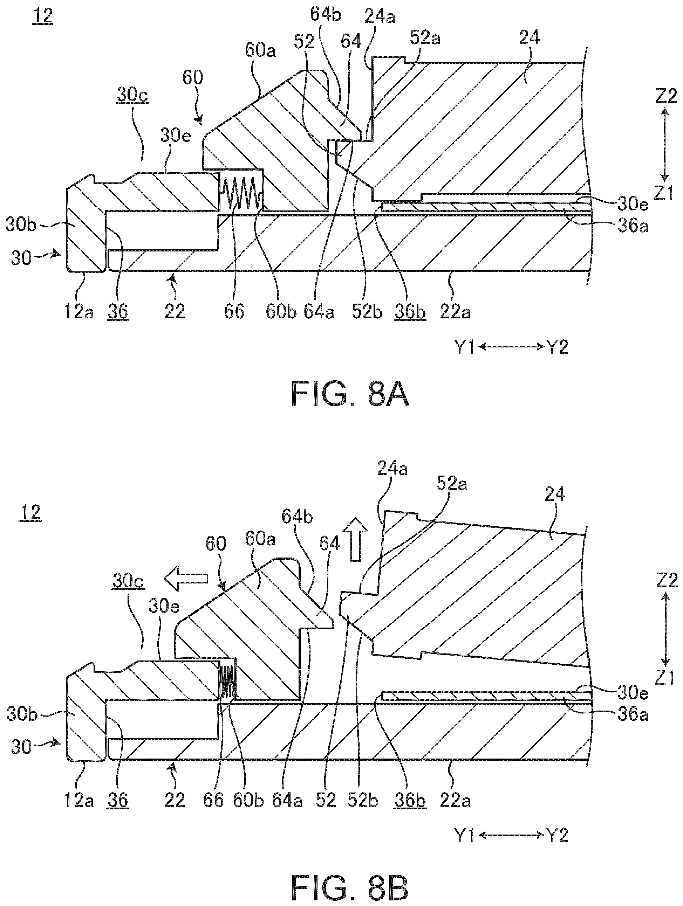

Hereinafter, the chassis 12 and elements provided for the chassis 12 will be described with a left side and a right side of the chassis 12 in its width direction being referred to as an X1-direction and an X2-direction, a near side and a deep side of the chassis 12 in its depth direction being referred to as a Y1-direction and a Y2-direction, and an upper side and a lower side of the chassis 12 in its thickness direction being referred to as a Z1-direction and a Z2-direction when the chassis 12 is viewed in a direction from a user who operates a keyboard 20 while looking at the display 18. The X1-direction and the X2-direction may be collectively referred to as an X-direction. Similarly, the Y1-direction and the Y2-direction may be also referred to as a Y-direction, and the Z1-direction and the Z2-direction may be also referred to as a Z-direction. For purpose of this description, a side closer to the keyboard 20 (the Z1-direction) in the thickness direction of the chassis 12 may be referred to as a lower side, and its reverse direction (the Z2-direction) may be referred to as an upper side (see FIG. 8A to FIG. 9B). The names of these directions are for the sake of convenience for description, and the usage of the electronic apparatus 10 is not limited to this.

The chassis 12 has a flat box shape. The chassis 12 contains a mother board on which a CPU, a memory, and so on are mounted, a cooling module for cooling the CPU or the like, and so on. The chassis 12 further contains a battery 24 as a power source of the electronic apparatus 10, a lock mechanism section 26 for holding the battery 24, speakers 28, 29, and so on.

On a front surface 12a of the chassis 12, the keyboard 20 and a touch pad 22 are provided. The keyboard 20 extends generally over the whole width of the front surface 12a in the X-direction. The keyboard 20 is provided in a wide range from the vicinity of a Y2-side edge portion of the front surface 12a to an area protruding from the center of the front surface 12a toward a Yl-side in the Y-direction. The touch pad 22 has a rectangular shape in a plan view. The touch pad 22 is provided in the vicinity of a Yl-side edge portion of the front surface 12a and is disposed generally in the center of the front surface 12a in the X-direction. The touch pad 22 can operate a cursor (a mouse pointer) displayed on the display 18 instead of a mouse. The touch pad 22 may also be able to perform a slide operation to slide a fingertip or the like on an operation surface 22a and a click operation to press the operation surface 22a by a fingertip or the like. The touch pad 22 can be configured to generate vibration with an actuator when the touch pad 22 receives a click operation.

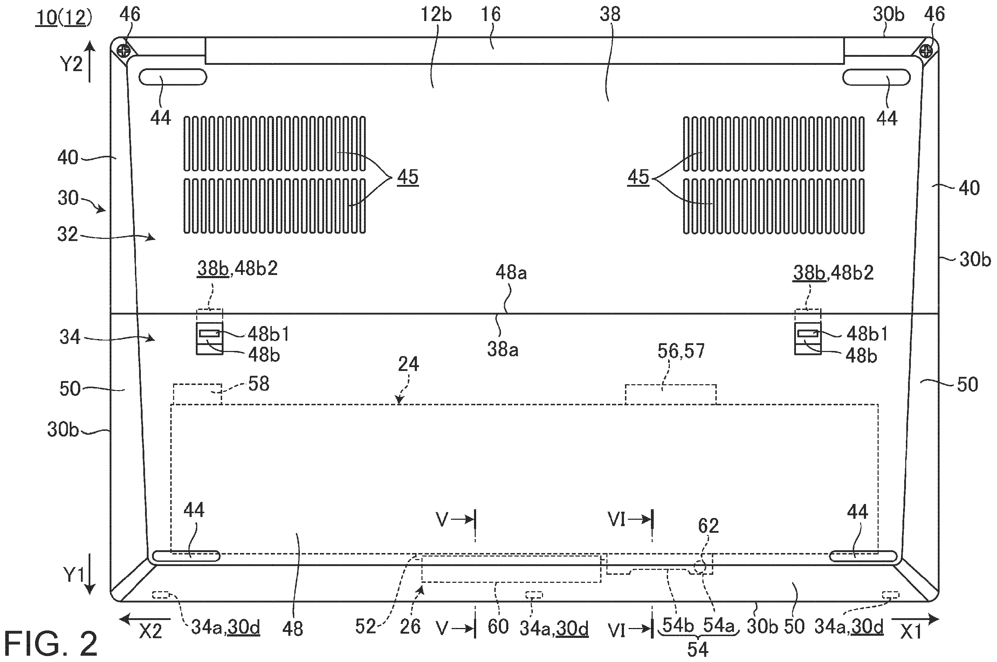

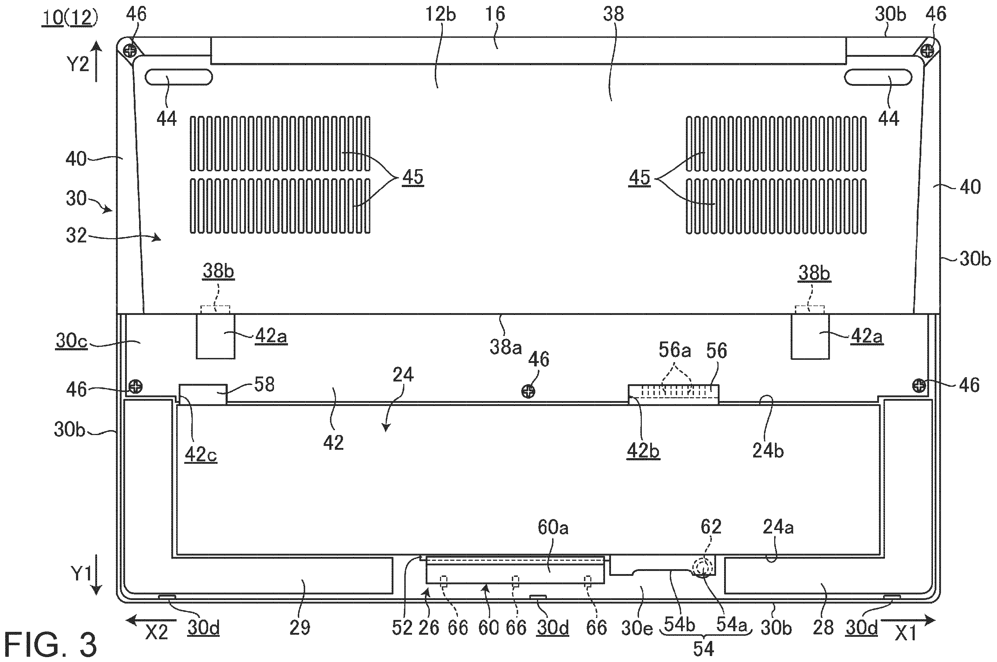

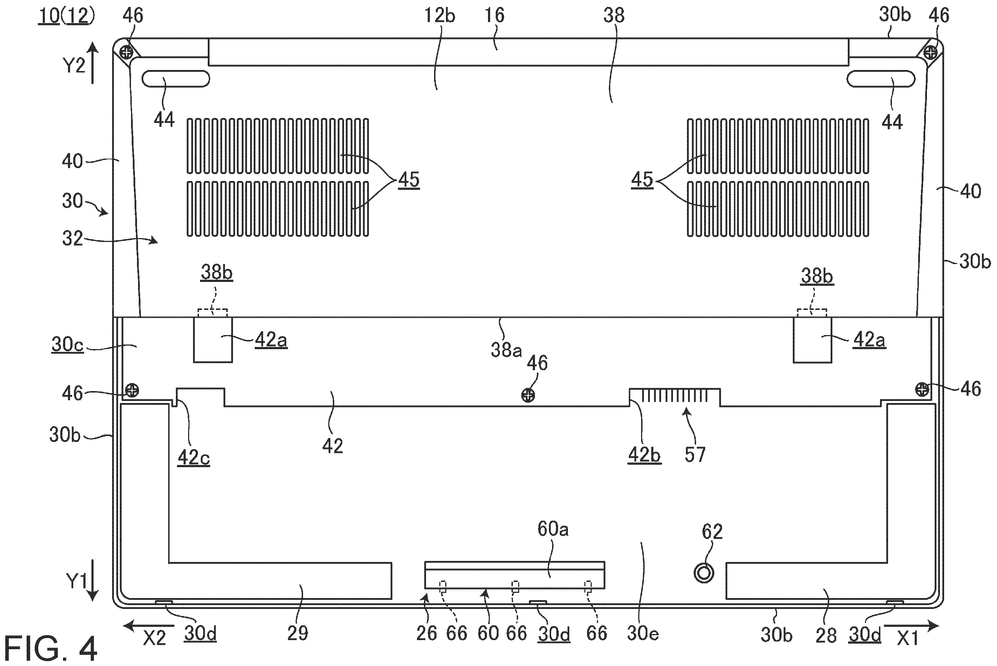

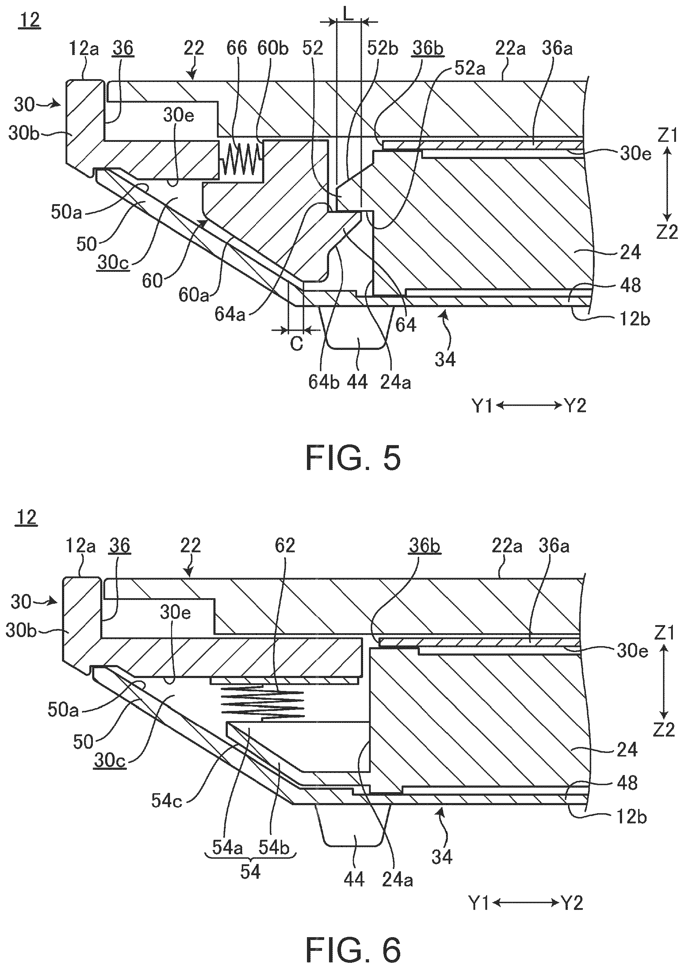

FIG. 2 is a bottom plan view of the electronic apparatus 10. FIG. 3 is a view in which a cover member 34 is removed from the chassis 12 illustrated in FIG. 2. FIG. 4 is a view in which a battery 24 is removed from the chassis 12 illustrated in FIG. 3. FIG. 5 is a schematic sectional view along a line V-V in FIG. 2. FIG. 6 is a schematic sectional view along a line VI-VI in FIG. 2.

As illustrated in FIGS. 1 to 6, the chassis 12 can be constituted by a chassis member 30, a base cover member 32, and the cover member 34.

The chassis member 30 includes a faceplate 30a and vertical walls 30b. The faceplate 30a forms a Z1-side surface (the front surface 12a) of the chassis 12. The vertical wall 30b is provided in a standing manner from an outer peripheral edge portion of the faceplate 30a to the Z2-direction.

The faceplate 30a includes a recessed portion 36 in which the touch pad 22 is provided (see FIGS. 1 and 5). The recessed portion 36 is a portion formed by recessing part of the faceplate 30a toward a Z2-side. The touch pad 22 is put on a base plate 36a in the recessed portion 36 such that the operation surface 22a is placed generally in flush with the front surface 12a. A through-hole 36b is formed in part of the base plate 36a. The touch pad 22 is connected to the mother board and so on via wiring lines through the through-hole 36b.

The faceplate 30a also has a rectangular hollow hole or recessed portion in which the keyboard 20 is provided. The front surface 12a formed by the outer surface of the faceplate 30a includes palm rests 12c (see FIG. 1). The palm rests 12c are disposed on an X1-side lateral portion and an X2-side lateral portion of the touch pad 22. The palm rests 12c are flat surfaces on which a user operating the keyboard 20 and the touch pad 22 can put his or her hands.

The chassis member 30 has a Z2-side surface serving as an opening surface 30c not covered with the faceplate 30a. Hereby, the chassis member 30 generally has a shallow bathtub shape (see FIG. 5). The opening surface 30c has a bottom portion formed of the faceplate 30a and corresponds to an open top surface of a container having four surrounding walls formed of the vertical walls 30b. The opening surface 30c in the present embodiment is partially closed by the base plate 36a of the recessed portion 36, or the like, but generally forms an upside opening of the chassis member 30 in a bathtub shape.

The base cover member 32 and the cover member 34 are covers detachably coupled to the chassis member 30 and configured to open and close the opening surface 30c. Part of the whole aperture area of the opening surface 30c, e.g., generally a Yl-side half of the whole aperture area, is covered with the cover member 34. The remaining part of the whole aperture area of the opening surface 30c, e.g., generally a Y2-side half of the whole aperture area, is covered with the base cover member 32.

As illustrated in FIGS. 2 to 4, the base cover member 32 can include an outer plate portion 38, inclined wall portions 40, and an inner plate portion 42.

The outer plate portion 38 forms a Z1-side surface (a bottom surface 12b) of the chassis 12. The outer plate portion 38 can form generally a Y2-side half of the whole surface area of the bottom surface 12b. The outer plate portion 38 includes a Yl-side edge portion 38a linearly extending along the X-direction. The edge portion 38a serves as a boundary line with respect to an edge portion 48a of the cover member 34. The outer plate portion 38 can include a pair of right and left engaging recessed portions 38b, 38b open to face the edge portion 38a.

A symbol 44 in FIG. 2 indicates a rubber leg. The rubber leg 44 is a leg portion used when the electronic apparatus 10 is put on a desk surface or the like. A pair of right and left rubber legs 44 is provided such that the right and left rubber legs 44 are fixed to the surface of the outer plate portion 38 and the surface of a plate portion 48 (described later) of the cover member 34, for example. The rubber leg 44 may have a bar shape elongated in the right-left direction. A symbol 45 in FIG. 2 indicates an air intake port. The air intake port 45 is an opening for introducing external air into a fan of the cooling module provided in the chassis 12.

The inclined wall portions 40 are wall portions provided in a standing manner from three edge portions of the outer plate portion 38 except the edge portion 38a. The external shape formed by the three edge portions of the outer plate portion 38 is smaller than the external shape formed by their corresponding three sides of the chassis member 30. The inclined wall portion 40 is a tapered wall portion diagonally connecting an edge portion of the outer plate portion 38 to the vertical wall 30b of the chassis member 30. The inclined wall portions 40 are provided in a standing manner in the Z2-direction from the three edge portions of the outer plate portion 38 except the edge portion 38a. In addition, the inclined wall portion 40 is gradually inclined in a direction (outward from the chassis 12) to be distanced from the outer plate portion 38 toward the standing direction of the inclined wall portion 40. Hereby, a distal end of the inclined wall portion 40 abuts with a distal end of the vertical wall 30b.

The inner plate portion 42 is a belt-shaped plate projecting toward the Yl-side from the edge portion 38a of the outer plate portion 38 (see FIGS. 3 and 4). The surface of the inner plate portion 42 is at a position one stage lower than the surface of the outer plate portion 38. That is, the inner plate portion 42 is at a position offset on a Z1-side from the outer plate portion 38. Hereby, the inner plate portion 42 is covered with the cover member 34 at normal times (see FIG. 2).

Such a base cover member 32 is screwed to the chassis member 30 with screw threads 46 provided at respective portions on the outer periphery. The base cover member 32 is fastened to the chassis member 30 with the screw threads 46 at Y2-side corners of the inclined wall portion 40 and at a plurality of positions of the inner plate portion 42, for example. The base cover member 32 can be removed from the chassis member 30 by removing the screw threads 46 after the cover member 34 is removed. The base cover member 32 can be engaged with the chassis member 30 with the use of a predetermined hook or the like, as well as the screw threads 46.

As illustrated in FIGS. 2 and 3, the cover member 34 can include the plate portion 48 and inclined wall portion 50.

The plate portion 48 forms the bottom surface 12b of the chassis 12. The plate portion 48 can form generally a Yl-side half of the whole surface area of the bottom surface 12b. The plate portion 48 includes a Y2-side edge portion 48a linearly extending along the X-direction. The edge portion 48a serves as a boundary line with respect to the edge portion 38a of the base cover member 32. The plate portion 48 can include a pair of right and left engaging latches 48b, 48b facing the edge portion 48a.

The engaging latch 48b is a board piece supported on the plate portion 48 and slidable along the Y-direction. The engaging latch 48b includes an operating section 48b1, and at least the operating section 48b1 is exposed to the surface (the bottom surface 12b) of the plate portion 48. The engaging latch 48b is slidable in the Y-direction by operating the operating section 48b1 by hooking a fingertip or the like on the operating section 48b1. A Y2-side end portion 48b2 of the engaging latch 48b is engaged with the engaging recessed portion 38b of the base cover member 32 at least at a position closest to a Y2-side. The end portion 48b2 separates from the engaging recessed portion 38b at least at a position closest to a Yl-side, so that the end portion 48b2 is disengaged. When the engaging latch 48b is engaged with the engaging recessed portion 38b, the movement of the cover member 34 in the Z-direction relative to the chassis member 30 is prevented.

A symbol 42a in FIG. 3 indicates a latch disposition groove formed in the inner plate portion 42. The latch disposition groove 42a is a hollow hole or a recessed portion, for example. The engaging latch 48b is slidably stored in the latch disposition groove 42a.

The inclined wall portions 50 are wall portion provided in a standing manner from three edge portions of the plate portion 48 except the edge portion 48a. The external shape formed by these three edge portions of the plate portion 48 is smaller than the external shape formed by their corresponding three sides of the chassis member 30. The inclined wall portion 50 is a tapered wall portion diagonally connecting the edge portion of the plate portion 48 to the vertical wall 30b of the chassis member 30. The inclined wall portions 50 are provided in a standing manner in the Z2-direction from the three edge portions of the plate portion 48 except the edge portion 48a. In addition, the inclined wall portion 50 is gradually inclined in a direction (outward from the chassis 12) to be distanced from the plate portion 48 toward the standing direction of the inclined wall portion 50. Hereby, a distal end of the inclined wall portion 50 abuts with a distal end of the vertical wall 30b (see FIG. 5).

As illustrated in FIG. 2, right and left inclined wall portions 50 extending along the Y-direction are continuous with right and left inclined wall portions 40 of the base cover member 32 across the edge portions 38a, 48a. Hereby, respective outer peripheral edge portions of the base cover member 32 and the cover member 34 seemingly have respective outer peripheries formed of the inclined wall portions 40, 50, and the base cover member 32 and the cover member 34 have a generally tapered outer periphery as a whole.

The cover member 34 can include hooks 34a in a Y1-side edge portion thereof. The hook 34a is formed on an inner wall surface 50a of the inclined wall portion 50 extending in the X-direction. Three hooks 34a are formed in the X-direction, for example. The chassis member 30 can include engaged parts 30d in a Yl-side edge portion thereof. The engaged parts 30d are formed on an inner wall surface of the vertical wall 30b extending in the X-direction or its vicinity. The engaged parts 30d are provided at respective positions corresponding to the three hooks 34a. The engaged part 30d is a recessed portion, for example. The hooks 34a can be engaged with the engaged parts 30d in the Y1-direction. When the hooks 34a are engaged with the engaged parts 30d, the movement of the cover member 34 in the Z-direction relative to the chassis member 30 is prevented.

Such a cover member 34 is disposed such that the edge portion 48a and its surrounding area cover the inner plate portion 42, whereas the base cover member 32 is screwed to the chassis member 30. The cover member 34 is disposed such that the hooks 34a are engaged with the engaged parts 30d and the engaging latches 48b are engaged with the engaging recessed portions 38b. Hereby, the cover member 34 is coupled to the chassis member 30. When the cover member 34 is to be removed from the chassis member 30, the engaging latches 48b are operated to be detached from the engaging recessed portions 38b. Subsequently, the edge portion 48a is lifted in the Z2-direction, and the hooks 34a are pulled out of the engaged parts 30d. Hereby, the cover member 34 can be easily removed from the chassis member 30 without complicated procedures such as removal of the screw threads.

As illustrated in FIGS. 3 and 5, the battery 24 is detachably supported on an inner surface 30e side of the chassis member 30 and is covered with the cover member 34. That is, the battery 24 is provided on a Yl-side area inside the chassis 12 which Yl-side area is opened and closed by the cover member 34. The battery 24 has a thin rectangular solid shape that is long in overall length in the X-direction, short in width in the Y-direction, and flat in the Z-direction, for example. The battery 24 has a Yl-side lateral surface (a first lateral surface) 24a and a lateral surface (a second lateral surface) 24b opposite from the lateral surface 24a such that the lateral surface 24a and the lateral surface 24b extend over a large part of the width of the chassis 12 in the X-direction. The lateral surface 24a is a surface facing the Yl-side inclined wall portion 50 of the cover member 34. The lateral surface 24b is a surface facing the inside of the chassis 12.

As illustrated in FIGS. 3 and 5, the battery 24 can include a locked part 52 and a projection piece 54 on the lateral surface 24a.

The locked part 52 is a detent-shaped projection provided on the lateral surface 24a and extends in the X-direction. The locked part 52 can have a length of about one-fourth of the overall length of the lateral surface 24a, for example. The locked part 52 is provided at an intermediate position including the center of the lateral surface 24a in its longitudinal direction (the X-direction). As illustrated in FIGS. 1 and 5, at least part of the locked part 52 can be at a position overlapping with the touch pad 22 in the up-down direction. The overall length of the locked part 52 in the present embodiment overlaps with the touch pad 22 in the up-down direction. The locked part 52 is arranged on an X1-side of the X2-side speaker 29, for example. A pair of right and left locked parts 52 may be provided in the longitudinal direction of the lateral surface 24a, for example. In this case, a pair of right and left latch members 60 (described later) should be provided as well.

The locked part 52 can include a locked surface 52a and a sliding surface 52b.

The locked surface 52a is a flat surface (along an XY plane) projecting from the lateral surface 24a and faces the Z2-side. The sliding surface 52b is on a side opposite from the locked surface 52a in the Z-direction and faces the Z1-side. The sliding surface 52b is an inclined surface gradually inclined toward the Z2-side from the lateral surface 24a toward a distal end side of the locked part 52. The locked part 52 may be formed of a recess recessed from the lateral surface 24a toward the Y2-side, instead of a projection projecting from the lateral surface 24a toward the Yl-side.

The projection piece 54 is an eave-shaped board piece provided on the lateral surface 24a and extends in the X-direction. The projection piece 54 can have a length shorter than that of the locked part 52. The projection piece 54 is adjacent to the X1-side of the locked part 52, for example. The projection piece 54 is placed between the locked part 52 and the X1-side speaker 28.

The projection piece 54 can include a receiving portion 54a and a handle portion 54b.

The receiving portion 54a abuts with one end of a spring member 62 of a lock mechanism section 26 (described later). A Z2-side surface of the projection piece 54 is formed of an inclined surface 54c along an inclined shape of the Yl-side inclined wall portion 50 (see FIG. 6). A Z1-side surface of the receiving portion 54a can be formed of a flat surface (along the XY plane). The Z1-side surface of the receiving portion 54a may be formed of an inclined surface along an inclined shape of the inclined surface 54c.

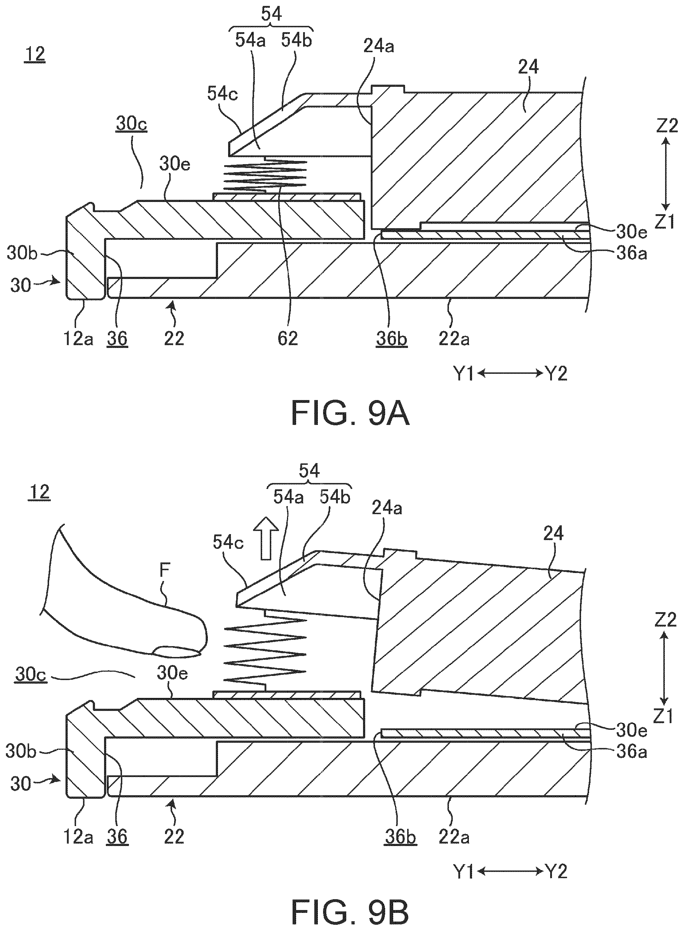

The handle portion 54b is formed in a range including the center of the projection piece 54 in its longitudinal direction, for example. The handle portion 54b extends from the receiving portion 54a in the X-direction along the lateral surface 24a. The handle portion 54b can be used as a finger hook portion at the time when the battery 24 is removed from the chassis 12 (see FIG. 9B). An operator can easily lift the battery 24 toward the Z2-side by hooking a fingertip F on a Z2-side surface of the handle portion 54b, for example. It is preferable that a Z1-side surface (an inner surface) of the handle portion 54b may be formed of an inclined surface along the inclined shape of the inclined surface 54c. This allows the fingertip F to be more easily hooked on the inner surface of the handle portion 54b.

As illustrated in FIGS. 3 and 5, the battery 24 can include a connector 56 and a positioning piece 58 on the lateral surface 24b.

The connector 56 serves as a contact point electrically connecting the battery 24 to a power source component provided on the mother board or the like. The connector 56 projects from the lateral surface 24b toward the Y2-direction. As illustrated in FIG. 3, the connector 56 can be at a position paired up with the projection piece 54 in the Y-direction. That is, the projection piece 54 and the connector 56 can be placed on the same straight line perpendicular to the lateral surfaces 24a, 24b and extending in the Y-direction.

As illustrated in FIG. 4, a terminal 57 to which the connector 56 is connected is provided on the mother board supported on the chassis member 30. It is preferable that the connector 56 be detachably connectable to the terminal 57 in the Z-direction. The connector 56 can be constituted by a connector having a comb-teeth structure in which a plurality of comb teeth 56a is arranged in the X-direction, for example. The comb teeth 56a are arranged in the X-direction via slits at predetermined intervals, and terminals (contact points) to make contact with the terminal 57 are provided between the comb teeth 56a. Hereby, the connector 56 can be connected to the terminal 57 toward the Z1-direction and can be removed from the terminal 57 toward the Z2-direction.

The connector 56 can be integrally provided with a board-piece-shaped stopper for positioning the battery 24 in the Z-direction. The stopper of the connector 56 can be held down by the inner plate portion 42. The inner plate portion 42 has a Yl-side edge portion provided with a notch 42b to expose the connector 56 and the terminal 57.

The positioning piece 58 is a stopper that can position the lateral surface 24b of the battery 24 at least in the Z-direction. The positioning piece 58 is a board piece projecting from the lateral surface 24b toward the Y2-direction. While the cover member 34 is coupled to the chassis member 30, the surface of the positioning piece 58 can be held down by the inner plate portion 42. In the present embodiment, the connector 56 is placed closer to the X1-side of the lateral surface 24b in its longitudinal direction. The positioning piece 58 should be provided at a position close to the X2-side of the lateral surface 24b. The inner plate portion 42 has a Yl-side edge portion provided with a notch 42c to expose the positioning piece 58.

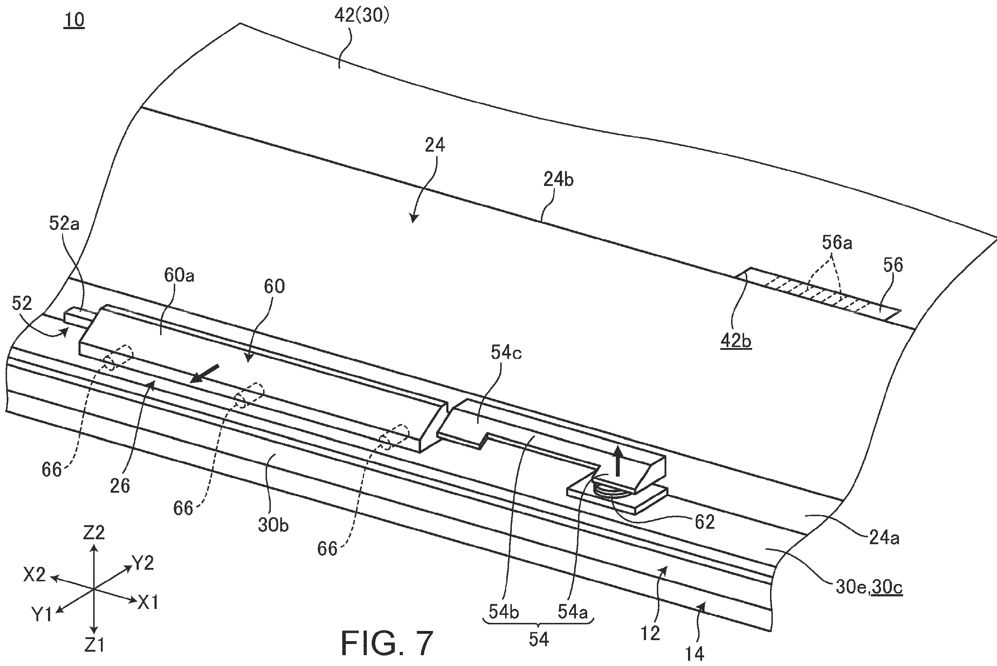

FIG. 7 is a schematic perspective view of the lock mechanism section 26 and its peripheral area. The lock mechanism section 26 maintains the battery 24 in the chassis 12. The lock mechanism section 26 also has a function to allow the battery 24 to be easily removed at the time of replacement or the like of the battery 24.

As illustrated in FIGS. 3 to 7, the lock mechanism section 26 includes a latch member 60 biased by a spring 66, and a spring member 62 configured to bias the battery 24 in the Z-direction.

As illustrated in FIGS. 5 and 7, the latch member 60 is supported on the inner surface 30e side of the chassis member 30 in such a manner as to be slidable in the Y-direction. The latch member 60 extends in the X-direction along the Yl-side edge portion of the chassis member 30. The latch member 60 can lock the locked part 52 of the battery 24 from the Z2-side. The latch member 60 has a length in the X-direction which length is slightly shorter than the overall length of the locked part 52, for example.

The latch member 60 can include a locking part 64, an inclined surface 60a, and a receiving surface 60b.

The locking part 64 can include a locking surface 64a and a sliding surface 64b. The locking surface 64a is a flat surface (along the XY plane) projecting from a Y2-side lateral surface of the latch member 60 and facing the Z1-side. The sliding surface 64b is on a side opposite from the locking surface 64a in the Z-direction and faces the Z2-side. The sliding surface 64b is an inclined surface gradually inclined toward the Z1-side from the lateral surface provided with the locking part 64 toward a distal end side of the locking part 64.

The inclined surface 60a is a surface of the latch member 60 which surface faces the Z2-side. The inclined surface 60a is gradually inclined toward the Z1-side to be directed toward the Y1-direction. It is preferable that the inclination angle of the inclined surface 60a be approximate to or equal to the inclination angle of the Y1-side inclined wall portion 50 of the cover member 34. The inclined surface 60a can come closer to or abut with the inner wall surface 50a of the Yl-side inclined wall portion 50 of the cover member 34 (see FIG. 5).

The receiving surface 60b is formed by hollowing the Z1-side surface of the latch member 60, for example. The receiving surface 60b is a surface standing in the Z-direction and facing the Yl-side. One end of the spring 66 generating a biasing force in the Y-direction is supported on the receiving surface 60b. The other end of the spring 66 is supported on the chassis member 30. The spring 66 is a compression coiled spring, for example, and is provided along the Y-direction. The spring 66 always biases the latch member 60 in the Y2-direction.

At normal times when the latch member 60 does not receive an operating force (external force) from an operator, the latch member 60 is at a locked position at which the latch member 60 is moved closest to the Y2-side by the biasing force from the spring 66 (see FIGS. 5 and 8A). At the locked position, the locking surface 64a of the latch member 60 holds down the locked surface 52a of the battery 24 from the Z2-side. At the locked position, the inclined surface 60a is at a position close to or abutting with the inner wall surface 50a of the inclined wall portion 50.

The latch member 60 can be moved to an unlocked position at which the latch member 60 retracts from the locked part 52 to the Yl-side against the biasing force from the spring 66 by applying an external force to the latch member 60 (see FIG. 8B). At the unlocked position, the locking surface 64a of the latch member 60 is separated from the locked surface 52a.

As illustrated in FIGS. 6 and 7, the spring member 62 is a compression coiled spring, for example, and is provided along the Z-direction. One end of the spring member 62 abuts with a Z1-side surface of the receiving portion 54a of the projection piece 54 in such a manner that the one end of the spring member 62 can press the Z1-side surface of the receiving portion 54a. The other end of the spring member 62 is supported on the inner surface 30e side of the chassis member 30. Hereby, the spring member 62 is disposed between the chassis member 30 and the battery 24 and always biases the battery 24 in a direction (the Z2-direction) where the battery 24 rises up from the inner surface 30e.

Next will be described a replacement operation to replace the battery 24.

FIG. 8A is a schematic side sectional view in which the chassis 12 illustrated in FIG. 5 is put on a desk surface or the like with its bottom surface 12b side facing upward and the cover member 34 is removed therefrom. FIG. 8B is a view in which the latch member 60 illustrated in FIG. 8A is moved to the unlocked position. FIG. 9A is a schematic side sectional view in which the chassis 12 illustrated in FIG. 6 is put on a desk surface or the like with its bottom surface 12b side facing upward and the cover member 34 is removed therefrom. FIG. 9B is a view in which the battery 24 rises up due to a biasing force from the spring member 62 illustrated in FIG. 9A.

First described is a procedure to remove the battery 24. When the battery 24 is to be removed, the cover 14 is closed onto the front surface 12a of the chassis 12, and the electronic apparatus 10 is put on the desk surface or the like with the bottom surface 12b side of the chassis 12 facing upward.

As illustrated in FIGS. 8A and 9A, the cover member 34 is removed from the chassis member 30. For example, the engaging latches 48b are operated by fingertips so as to be disengaged from the engaging recessed portions 38b, and the hooks 34a are removed from the engaged parts 30d. Hereby, the cover member 34 can be easily removed from the chassis member 30 without using tools or the like. As a result, as illustrated in FIGS. 3 and 7, a Yl-side area of the opening surface 30c of the chassis member 30 is exposed, so that the battery 24 and the lock mechanism section 26 are accessible.

As illustrated in FIGS. 8A and 8B, the latch member 60 at the locked position is moved to the unlocked position. The locking part 64 of the latch member 60 is separated from the locked part 52 of the battery 24. As a result, as illustrated in FIGS. 9A and 9B, the projection piece 54 is pushed by the biasing force from the spring member 62, so that the battery 24 rises upward (toward the Z2-side) from the inner surface 30e. That is, the battery 24 pops up.

At this time, the connector 56 is detachably connected to the terminal 57 in the Z-direction. On this account, the battery 24 rotates with the lateral surface 24b side provided with the connector 56 and the positioning piece 58 as a pivot point, so that the lateral surface 24a side rises up. Particularly, the connector 56 in the present embodiment is placed at a position overlapping, in the Y-direction, with the projection piece 54 configured to receive the biasing force from the spring member 62. Accordingly, at the time when the projection piece 54 is lifted by the spring member 62, the connector 56 and the terminal 57 do not receive a load or the like in the X-direction. This accordingly makes it possible to further restrain a load from being applied to the connector 56 and the terminal 57 at the time when the battery 24 pops up. The projection piece 54 also functions as a handle at the time when the battery 24 is removed as well as the time when the battery 24 pops up, and the battery 24 can be pulled out straight with the use of the projection piece 54 without any load being applied thereto.

As illustrated in FIG. 9B, the fingertip F is inserted under (the Z1-side) the handle portion 54b of the projection piece 54 thus rising and lifts up the handle portion 54b. Hereby, the battery 24 can be easily removed from the chassis 12.

Note that, when an operating force to the latch member 60 is released at the unlocked position, the latch member 60 returns to the locked position by the biasing force from the spring 66. At this time, the battery 24 is in a pop-up state due to the biasing force from the spring member 62. Accordingly, the sliding surface 64b of the latch member 60 slides on the sliding surface 52b of the locked part 52, so that the latch member 60 slips in under the locked part 52. As a result, the locked part 52 is caught on the locking part 64, so that the battery 24 is kept in a pop-up state. That is, after the lock mechanism section 26 moves the latch member 60 to the unlocked position to pop up the battery 24, the fingertip can be released from the latch member 60. Hereby, the battery 24 can be further easily removed. Naturally, the battery 24 may be removed while the latch member 60 is maintained at the unlocked position by the fingertip.

Next will be described a procedure to attach a new battery 24 to be replaced with the battery 24 removed as described above.

In this case, the latch member 60 returns to the locked position due to the biasing force from the spring 66. The lock mechanism section 26 allows the battery 24 to be attached to the chassis 12 while the latch member 60 is at the locked position. First, the connector 56 and the positioning piece 58 of the battery 24 are tilted downward and inserted into the notches 42b, 42c. Then, the battery 24 is pushed down into the chassis 12 against the biasing force from the spring member 62. The locked part 52 of the battery 24 presses down the latch member 60 from its upper side. This causes the sliding surface 52b to press down the sliding surface 64b and slide thereon, so that the latch member 60 is moved to the Yl-side against the biasing force from the spring 66.

When the battery 24 is pushed down to a predetermined position, the latch member 60 moves to the locked position again due to the biasing force from the spring 66. Then, at the locked position, the locking surface 64a of the latch member 60 holds down the locked surface 52a of the battery 24 from the Z2-side. Hereby, the battery 24 is locked with the latch member 60. At this time, the connector 56 is also smoothly connected to the terminal 57 from the upper side. Finally, the cover member 34 is coupled to the chassis member 30, so that the attachment operation of the battery 24 is completed.

As described above, the electronic apparatus 10 according to the present embodiment can include the latch member 60 supported on the chassis member 30 in such a manner as to be movable between the locked position where the latch member 60 holds down the locked part 52 of the battery 24 and the unlocked position where the latch member 60 retracts from the locked part 52. The latch member 60 has the inclined surface 60a facing the inner wall surface 50a of the inclined wall portion 50 of the cover member 34 at the locked position. The electronic apparatus 10 can further include the spring member 62 provided between the chassis member 30 and the battery 24 and configured to bias the battery 24 such that the battery 24 rises up from the inner surface 30e.

Therefore, in the electronic apparatus 10, when the latch member 60 is just moved from the locked position to the unlocked position, the battery 24 rises up due to the biasing force from the spring member 62. On this account, the battery 24 can be easily removed from the electronic apparatus 10 without complicated procedures using a tool. Thus, the electronic apparatus 10 can reduce troubles necessary for a general user to replace the battery 24 or restrain the general user from feeling pressure at the time of replacing the battery 24. Besides, the latch member 60 has the inclined surface 60a facing the inner wall surface 50a of the inclined wall portion 50 of the cover member 34 at the locked position. Accordingly, in the electronic apparatus 10, the latch member 60 can be provided by effectively using a triangle space inside the inclined wall portion 50 which triangle space is a dead space in the chassis 12 in a general electronic apparatus (see FIG. 5). Besides, when the cover member 34 is removed at the time of replacement of the battery 24, the inclined wall portion 50 is also removed from the electronic apparatus 10. As a result, a moving space for the latch member 60 to move to the unlocked position is formed. Accordingly, the electronic apparatus 10 can restrain hindrance to reduction in thickness and size of the chassis 12 due to securing of an installation space for the latch member 60.

In the meantime, in the chassis 12, the palm rest 12c on the lateral portion of the touch pad 22 is formed of only the thin faceplate 30a. Accordingly, a space under the palm rest 12c is a triangle space that easily becomes a dead space but can secure a height in the up-down direction to some extent. In view of this, in the present embodiment, the speakers 28, 29 are provided under the palm rests 12c (see FIGS. 1 and 3). Hereby, the electronic apparatus 10 can make effective use of the dead spaces under the palm rests 12c and expand box capacities for the speakers 28, 29 to the maximum.

In the meantime, the triangle space inside the inclined wall portion 50 is further narrowed at a position overlapping with the touch pad 22. This is because the touch pad 22 is thin but is still thicker than the board thickness of the faceplate 30a around the touch pad 22. In view of this, in the present embodiment, the latch member 60 is disposed at a position overlapping with the touch pad 22 in the up-down direction. This is because the latch member 60 does not need to secure a large height in the up-down direction, unlike the speakers 28, 29. Hereby, the electronic apparatus 10 can make effective use of a smaller dead space under the touch pad 22 to provide the latch member 60, thereby achieving further reduction in thickness and size of the chassis 12.

The inclined surface 60a of the latch member 60 can be disposed closer to or abut with the inner wall surface 50a of the inclined wall portion 50 at the locked position (see FIG. 5). This makes it possible to restrain the latch member 60 from wobbling or unintentionally retracting from the locked part 52 due to an impact or the like caused when the electronic apparatus 10 falls. As a result, it is possible to restrain the battery 24 from rising up in the chassis 12 due to the biasing force from the spring member 62 or wobbling.

Here, as illustrated in FIG. 5, in a case where the latch member 60 is at the locked position, a mutual overlapping amount between the locking surface 64a and the locked surface 52a, that is, a contact distance in the Y-direction between the locking surface 64a and the locked surface 52a, is referred to as a distance L. A gap between the inclined surface 60a and the inner wall surface 50a in a moving direction (the Y-direction) of the latch member 60 is referred to as a clearance C. It is preferable that the clearance C be smaller than the distance L. That is, assume a case where the latch member 60 at the locked position moves to the Yl-side due to an impact or the like caused when the electronic apparatus 10 falls. In this case, since the clearance C is smaller than the distance L, the inclined surface 60a abuts with the inner wall surface 50a before the locking surface 64a is released from the locked surface 52a. This prevents the latch member 60 from further retracting, thereby more surely restraining the battery 24 from wobbling in the chassis 12. Note that the clearance C is zero when the inclined surface 60a abuts with the inner wall surface 50a.

In the electronic apparatus 10, the cover member 34 can be configured to open and close part of the opening surface 30c of the chassis member 30. The remaining part of the opening surface 30c is blocked by the base cover member 32 fixed to the chassis member 30 with screw threads. Hereby, only a device that frequently requires replacement or maintenance is provided inside the cover member 34 in the chassis 12 in addition to the battery 24, and the mother board or the like can be hidden inside the base cover member 32. Hereby, the electronic apparatus 10 can achieve further easy removal of the cover member 34 at the time of replacement of the battery 24, thereby making it possible to further reduce troubles for a general user or further restrain the general user from feeling pressure.

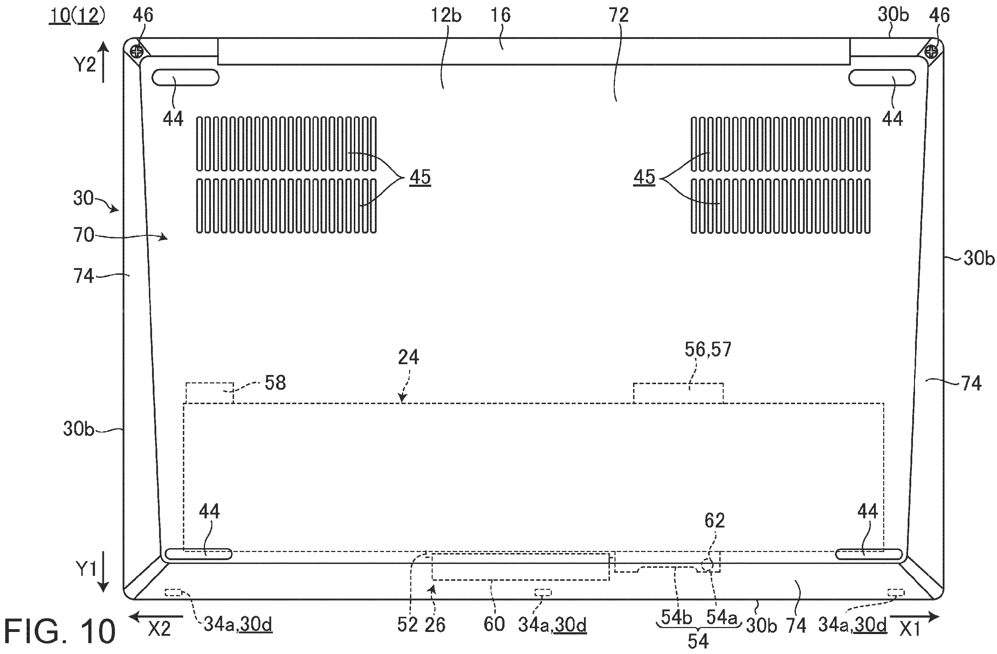

FIG. 10 is a bottom plan view of the chassis 12 including a cover member 70 according to a modification.

The above description deals with a configuration in which the opening surface 30c of the chassis member 30 is covered with the base cover member 32 and the cover member 34. As illustrated in FIG. 10, a single cover member 70 can be detachably provided to close the opening surface 30c of the chassis member 30. The cover member 70 substantially has a structure in which the base cover member 32 is integrated with the cover member 34.

The cover member 70 can include a plate portion 72 and inclined wall portions 74. The plate portion 72 has a structure in which the outer plate portion 38 and the plate portion 48 illustrated in FIG. 2 are integrated with each other. A portion of the plate portion 72 which portion corresponds to the inner plate portion 42 of the base cover member 32 can be omitted. Right and left inclined wall portions 74 along the Y-direction have a structure in which the inclined wall portion 40 and the inclined wall portion 50 illustrated in FIG. 2 are integrated with each other. A Y1-side inclined wall portion 74 along the X-direction can have the same structure as the inclined wall portion 50 illustrated in FIG. 2.

### Description of Symbols

- 10: electronic apparatus
- 12: chassis
- 14: cover
- 22: touch pad
- 24: battery
- 26: lock mechanism section
- 30: chassis member
- 30c: opening surface
- 32: base cover member
- 34, 70: cover member
- 40, 50, 74: inclined wall portion
- 48, 72: plate portion
- 52: locked part
- 54: projection piece
- 54a: receiving portion
- 54b: handle portion
- 56: connector
- 57: terminal
- 60: latch member
- 62: spring member
- 64: locking part
- 62: spring member
- 64: locking part

## Claims

1. An electronic apparatus (10) comprising:
a chassis member (30) comprising an opening surface (30c) ;
a cover member (34, 70) including a plate portion (48, 72) and an inclined wall portion (40, 50, 74) arranged in a standing manner from an edge portion of the plate portion and inclined in a direction separating from the plate portion toward a standing direction of the inclined wall portion, the cover member being configured to open and close at least part of the opening surface;
a battery (24) detachably supported on an inner surface side of the chassis member and including a locked part (52) on a first lateral surface facing the inclined wall portion;
a latch member (60) supported on the chassis member in such a manner as to be movable between a locked position where the latch member is configured to hold down the locked part and an unlocked position where the latch member is configured to retract from the locked part, the latch member comprising an inclined surface facing an inner wall surface of the inclined wall portion at the locked position, wherein the inclined surface is disposed in proximity to or abutting the inner wall surface of the inclined wall portion at the locked position; and
a spring member (62) provided between the chassis member and the battery and configured to bias the battery such that the battery rises up from an inner surface of the chassis member.

2. The electronic apparatus according to claim 1, wherein the battery includes a projection piece (54) projecting from a lateral surface of the battery such that one end of the spring member abuts the projection piece.

3. The electronic apparatus according to claim 2, wherein the projection piece includes:
a receiving portion (54a) abutting one end of the spring member; and
a handle portion (54b) extending from the receiving portion along the lateral surface.

4. The electronic apparatus according to claim 3, wherein the projection piece is provided on the first lateral surface.

5. The electronic apparatus according to claim 4, further comprising a terminal (57) supported on the chassis member, wherein:
the battery includes a connector (56) projecting from a second lateral surface facing an opposite side from the first lateral surface and detachably connected to the terminal; and
the projection piece and the connector are arranged on the same straight line perpendicular to the first lateral surface and the second lateral surface.

6. The electronic apparatus according to any preceding claim, wherein a clearance between the inclined surface and the inner wall surface is smaller than an overlapping amount between the latch member and the locked part, in terms of a moving direction of the latch member.

7. The electronic apparatus according to claim 1, wherein:
the cover member is configured to open and close part of the opening surface of the chassis member; and
the electronic apparatus further comprises a base cover member (32) fixable to the chassis member with screw threads and configured to close a remaining part of the opening surface of the chassis member.

8. The electronic apparatus according to claim 1, further comprising a touch pad (22) exposed on a surface of the chassis member, wherein the latch member is arranged at a position overlapping with the touch pad in an up-down direction.

## Patentansprüche

1. Elektronisches Gerät (10), Folgendes umfassend:
ein Gehäuseelement (30), umfassend eine Öffnungsfläche (30c);
ein Abdeckelement (34, 70), beinhaltend einen Plattenabschnitt (48, 72) und einen geneigten Wandabschnitt (40, 50, 74), der von einem Randabschnitt des Plattenabschnitts aus aufrecht angeordnet ist und in einer Richtung geneigt ist, die von dem Plattenabschnitt weg zu einer aufrechten Richtung des geneigten Wandabschnitts verläuft, wobei das Abdeckelement konfiguriert ist, um mindestens einen Teil der Öffnungsfläche zu öffnen und zu schließen;
eine Batterie (24), die lösbar an einer Innenflächenseite des Gehäuseelements gelagert ist und ein verriegeltes Teil (52) an einer ersten Seitenfläche, die dem geneigten Wandabschnitt zugewandt ist, beinhaltet;
ein Verriegelungselement (60), das derart an dem Gehäuseelement gelagert ist, dass es zwischen einer verriegelten Position, in der das Verriegelungselement konfiguriert ist, um das verriegelte Teil niederzuhalten, und einer entriegelten Position, in der das Verriegelungselement konfiguriert ist, um sich aus dem verriegelten Teil zurückzuziehen, bewegbar ist, wobei das Verriegelungselement eine geneigte Fläche umfasst, die in der verriegelten Position einer Innenwandfläche des geneigten Wandabschnitts zugewandt ist, wobei die geneigte Fläche in der verriegelten Position in der Nähe der Innenwandfläche des geneigten Wandabschnitts angeordnet ist oder an dieser anliegt; und
ein Federelement (62), das zwischen dem Gehäuseelement und der Batterie bereitgestellt ist und konfiguriert ist, um die Batterie derart vorzuspannen, dass die Batterie von einer Innenfläche des Gehäuseelements aufragt.

2. Elektronisches Gerät nach Anspruch 1, wobei die Batterie ein Vorsprungsstück (54) beinhaltet, das von einer Seitenfläche der Batterie vorspringt, sodass ein Ende des Federelements an dem Vorsprungsstück anliegt.

3. Elektronisches Gerät nach Anspruch 2, wobei das Vorsprungsstück Folgendes beinhaltet:
einen Aufnahmeabschnitt (54a), der an einem Ende des Federelements anliegt; und
einen Griffabschnitt (54b), der sich von dem Aufnahmeabschnitt entlang der Seitenfläche erstreckt.

4. Elektronisches Gerät nach Anspruch 3, wobei das Vorsprungsstück an der ersten Seitenfläche bereitgestellt ist.

5. Elektronisches Gerät nach Anspruch 4, ferner umfassend einen Anschluss (57), der an dem Gehäuseelement gelagert ist, wobei:
die Batterie einen Verbinder (56) beinhaltet, der von einer zweiten Seitenfläche vorspringt, die einer der ersten Seitenfläche gegenüberliegenden Seite zugewandt ist und lösbar mit dem Anschluss verbunden ist; und
das Vorsprungsstück und der Verbinder auf derselben Geraden senkrecht zu der ersten Seitenfläche und der zweiten Seitenfläche angeordnet sind.

6. Elektronisches Gerät nach einem der vorhergehenden Ansprüche, wobei ein Abstand zwischen der geneigten Fläche und der Innenwandfläche in Bezug auf eine Bewegungsrichtung des Verriegelungselements kleiner als ein Überschneidungsbetrag zwischen dem Verriegelungselement und dem verriegelten Teil ist.

7. Elektronisches Gerät nach Anspruch 1, wobei:
das Abdeckelement konfiguriert ist, um einen Teil der Öffnungsfläche des Gehäuseelements zu öffnen und zu schließen; und
das elektronische Gerät ferner ein Bodenabdeckungselement (32) umfasst, das mit Schraubgewinden an dem Gehäuseelement befestigbar ist und konfiguriert ist, um einen verbleibenden Teil der Öffnungsfläche des Gehäuseelements zu verschließen.

8. Elektronisches Gerät nach Anspruch 1, ferner umfassend ein Berührungsfeld (22), das an einer Fläche des Gehäuseelements freiliegt, wobei das Verriegelungselement an einer Position angeordnet ist, die sich mit dem Berührungsfeld in einer Oben-Unten-Richtung überschneidet.

## Revendications

1. Appareil électronique (10) comprenant :
un élément de châssis (30) comportant une surface d'ouverture (30c) ;
un élément de couvercle (34, 70) comprenant une partie en plaque (48, 72) et une partie de paroi inclinée (40, 50, 74) s'élevant depuis un bord de la partie en plaque et inclinée dans une direction s'éloignant de la partie en plaque dans une direction s'éloignant de la partie en plaque selon la direction d'élévation de la partie de paroi inclinée dans une direction s'éloignant de la partie en plaque selon la direction d'élévation de la partie de paroi inclinée, l'élément de couvercle étant configuré pour ouvrir et fermer au moins une partie de la surface d'ouverture ;
une batterie (24) supportée de manière amovible sur la face interne de l'élément de châssis et comportant une partie verrouillée (52) sur une première surface latérale faisant face à la partie de paroi inclinée ;
un élément de verrouillage (60) monté sur l'élément de châssis de manière à pouvoir se déplacer entre une position verrouillée, dans laquelle l'élément de verrouillage est configuré pour retenir la partie verrouillée, et une position déverrouillée, dans laquelle l'élément de verrouillage est configuré pour se dégager de la partie verrouillée, l'élément de verrouillage comprenant une surface inclinée faisant face à une surface de paroi intérieure de la partie de paroi inclinée dans la position verrouillée, la surface inclinée étant disposée à proximité de la surface de paroi intérieure de la partie de paroi inclinée ou en butée contre celle-ci dans la position verrouillée ; et
un élément à ressort (62) prévu entre l'élément de châssis et la batterie et agencé pour solliciter la batterie de telle sorte que celle-ci se soulève d'une surface intérieure de l'élément de châssis.

2. Appareil électronique selon la revendication 1, dans lequel la batterie comprend une pièce en saillie (54) faisant saillie depuis une surface latérale de la batterie de telle sorte qu'une extrémité de l'élément à ressort vienne en butée contre la pièce en saillie.

3. Appareil électronique selon la revendication 2, dans lequel la pièce en saillie comprend :
une partie de réception (54a) venant en butée contre une extrémité de l'élément à ressort ; et
une partie de préhension (54b) s'étendant depuis la partie de réception le long de la surface latérale.

4. Appareil électronique selon la revendication 3, dans lequel la pièce en saillie est prévue sur la première surface latérale.

5. Appareil électronique selon la revendication 4, comprenant en outre une borne (57) supportée sur l'élément de châssis, dans lequel :
la batterie comprend un connecteur (56) faisant saillie depuis une deuxième surface latérale faisant face à un côté opposé à celui de la première surface latérale et relié de manière amovible à la borne ; et
la pièce en saillie et le connecteur sont disposés sur une même ligne droite perpendiculaire à la première surface latérale et à la deuxième surface latérale.

6. Appareil électronique selon l'une des revendications précédentes, dans lequel un jeu entre la surface inclinée et la surface de paroi intérieure est inférieur au recouvrement entre l'élément de verrouillage et la partie verrouillée dans la direction de déplacement de l'élément de verrouillage.

7. Appareil électronique selon la revendication 1, dans lequel :
l'élément de couvercle est configuré pour ouvrir et fermer une partie de la surface d'ouverture de l'élément de châssis ; et
l'appareil électronique comprend en outre un élément de couvercle de base (32) pouvant être fixé à l'élément de châssis au moyen de vis et configuré pour fermer une partie restante de la surface d'ouverture de l'élément de châssis.

8. Appareil électronique selon la revendication 1, comprenant en outre un pavé tactile (22) exposé sur une surface de l'élément de châssis, dans lequel l'élément de verrouillage est disposé à une position qui se superpose au pavé tactile dans la direction verticale.
